# EUROPÄISCHE PATENTANMELDUNG

(11) **EP 1 033 302 A2**
(43) Veröffentlichungstag der Anmeldung: **06.09.2000**
(21) Anmeldenummer: 00101416.6
(22) Anmeldetag: 25.01.2000
(51) Int. Cl.: B64G 1/50, F28D 15/02

(54) **Wärmefluss-Koppelungs-Mechanismus zur Verwendung in der Raumfahrt**

(30) Priorität: 03.03.1999 DE 19909167
(71) Anmelder: DORNIER GmbH, 88039 Friedrichshafen (DE)
(72) Erfinder: Schmid, Manfred, 88090 Immenstaad (DE); Barho, Reiner, 88682 Salem (DE); Schwarzott, Walter, 88048 Friedrichshafen (DE); Kreeb, Helmut, Dr., 88709 Meersburg (DE)
(74) Vertreter: Landsmann, Ralf, Dipl.-Ing.

(57) **Zusammenfassung**

Wärmefluss-Kopplungs-Mechanismus zur Verwendung in der Raumfahrt, bestehend aus zwei Paneelen (4,8), in die jeweils Wärmerohre (20,22) integriert sind, wobei das eine Paneel (8) eine Ausnehmung oder Kulisse (24) aufweist,
das andere Paneel (4) eine der Kulisse angepasste Nase oder Vorsprung (26) aufweist,
beide Paneele (4,8) mittels mindestens eines Gelenks (6) miteinander verbunden sind,
das Gelenk (6) radial freigegeben wird, wenn der Vorsprung (26) sich vollständig in der Kulisse (24) befindet und
durch gleichzeitige Freigabe einer Druckquelle (40) eine hydraulisch beaufschlagte Membran (38), die einen Druckkanal (36) abschliesst und einen Teil der Wand (34) der Kulisse (24) bildet, einen Anpressdruck liefert, der die beiden aneinanderliegenden Wandflächen (30,32) der Paneele (4,8) zu einer Wärmebrücke verspannt.

## Beschreibung

Die Erfindung betrifft die wärmeleitende Verbindung für gelenkig miteinander verbundene Bauteile unter 0-g-Bedingungen.

Unter terrestrischen Bedingungen kann der gute Wärmeübergang zwischen zwei flächenhaft aneinanderliegenden Bauteilen z.B. durch eine Presspassung sichergestellt werden.

Bei Satelliten im Orbit müssen Bauteile, die während des Transports eingeklappt waren, einerseits leichtgängig in eine ausgeklappte, verriegelte Lage gelangen können und andererseits sich selbst so montieren, dass der hier geforderte flächenhafte Wärmeübergang zwischen zwei Bauteilen sichergestellt ist.

Aufgabe der Erfindung ist es, die metallischen Oberflächen zweier Bauteile in ausgeklappten Zustand in flächenhaften Berührungskontakt zu bringen, damit eine Wärmebrücke entsteht, die einen hohen Wärmefluss ermöglicht.

Diese Aufgabe wird erfindungsgemäss durch den Gegenstand des Patentanspruchs gelöst.

Die Erfindung wird nachfolgend anhand von Figuren näher erläutert.

Es zeigen:
- Fig. 1:: einen Satelliten mit ausgeklappten Radiator-Paneelen;
- Fig. 2:: die Verbindung zweier Paneelen in axonometrischer Darstellung;

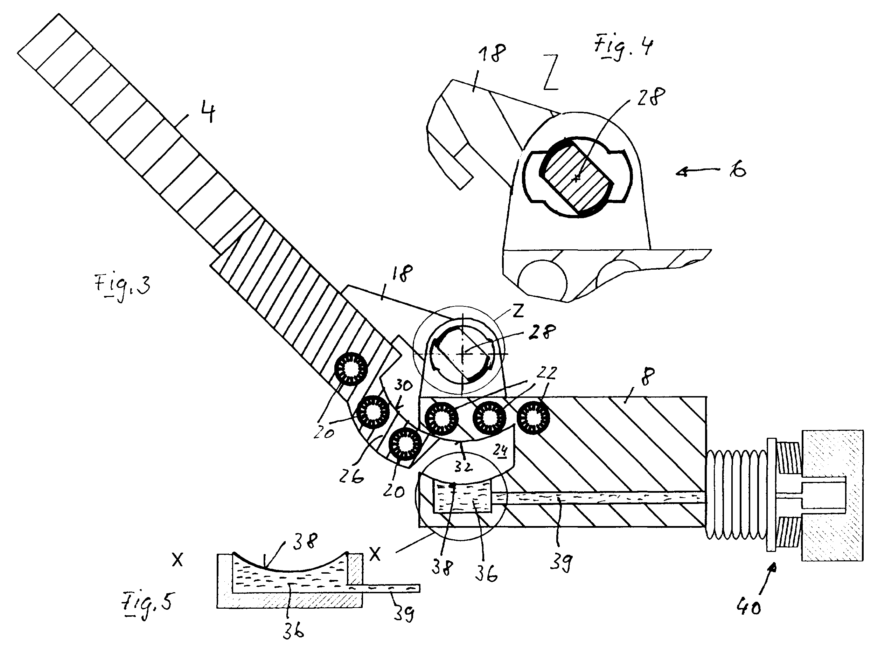

- Fig. 3:: den Gegenstand von Fig. 2 in Schnittdarstellung;
- Fig. 4 und 5:: Einzelheiten von Fig. 3 in vergrösserter Darstellung;
- Fig. 6:: zwei Paneele in vollständig ausgeklapptem Zustand in Schnittdarstellung und
- Fig. 7, 8, 9:: ein weiteres Ausführungsbeispiel der Erfindung in gefalteter, teilentfalteter und vollständig entfalteter Konfiguration

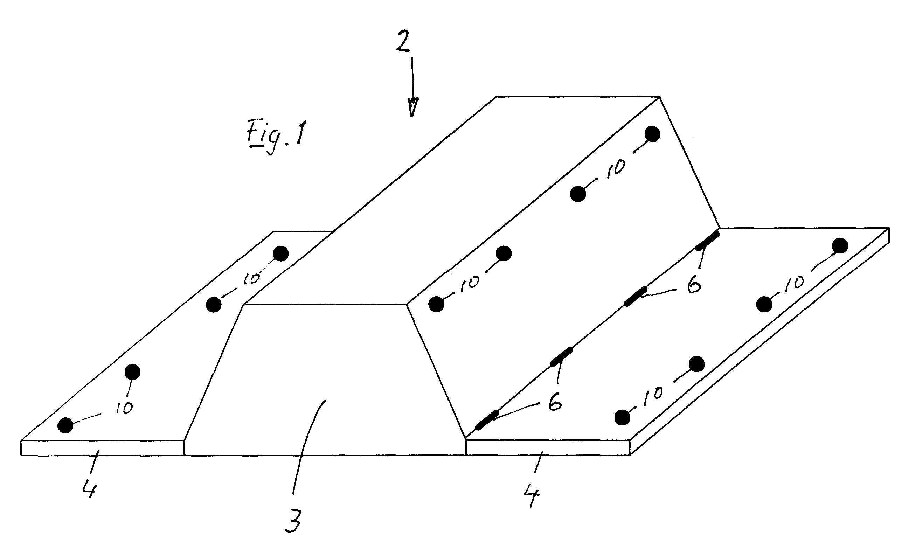

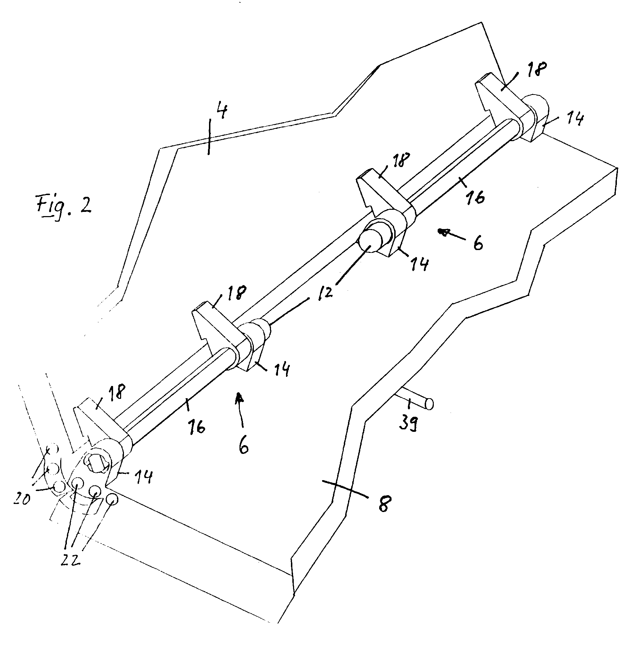

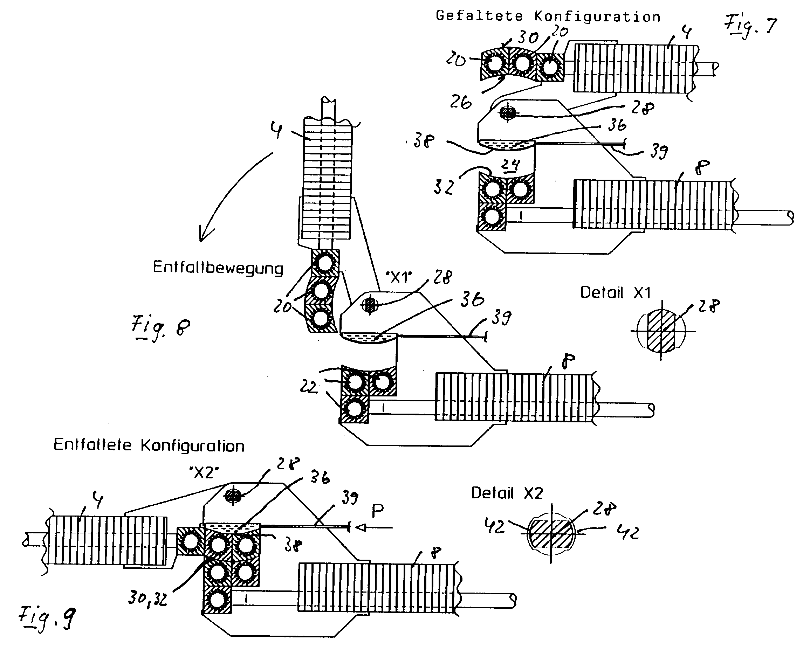

Fig. 1 zeigt einen Satelliten 2 bestehend aus einem Satellitenkörper 3 und Radiator-Paneelen 4, die mittels der Gelenke 6 mit Paneelen 8 (Fig. 2) verbunden sind. Die Paneele 4 sind während des Transports in den Orbit eingeklappt (Fig. 7) und werden von Verriegelungselementen 10 in eingeklapptem Zustand gehalten bis die Zündung pyrotechnischer Einrichtungen 12 die Paneele 4 freigeben und die Entfaltung beginnen kann.

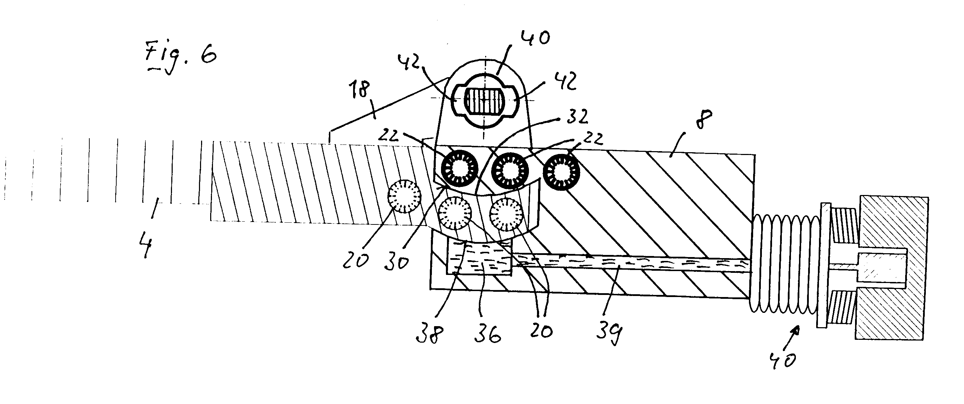

Fig. 2 zeigt zwei redundant arbeitende, elektrische Aktuatoren 12, die an den Lagerböcken 14 des Paneels 8 befestigt sind und auf die Welle 16 des Gelenks 6 einwirken. Welle 16 ist mittels der Hebel 18 mit dem Paneel 4 verbunden, so daß Paneel 4 vollständig entfaltet werden kann, wie es in Fig. 6 dargestellt ist.

Aufgabe der Erfindung ist es, die in die Paneele 4 und 8 integrierten Wärmerohre (heat-pipes) 20 und 22 wärmeflusstechnisch zu koppeln.

Hierzu weist das Paneel 8 im Bereich der Wärmerohre 22 eine Ausnehmung oder Kulisse 24 auf, während das Paneel 4 eine Nase oder einen Vorsprung 26 bildet, der die Wärmerohre 20 enthält. Kulisse 24 und Vorsprung 26 sind nun so bemessen und in Bezug auf die Drehachse 28 des Gelenks 6 so in ihren Krümmungsradien gestaltet, dass der Vorsprung 26 mit leichtem Spiel in die Kulisse 24 hineingleitet, ohne sich zu verkanten oder zu klemmen. Dieses ,Spiel' bedeutet nun aber, dass die Wandflächen 30, 32 der Paneelen 4, 8 zunächst keinen genügenden Kontakt haben, um eine gute flächenhafte Wärmebrücke zwischen den Wärmerohren 20, 22 zu bilden.

In der Wand 34 der Kulisse 24 befindet sich ein Druckkanal 36, der insgesamt oder segmentiert eine Länge von mehreren Metern aufweisen kann und mit einer Membran 38 - vorzugsweise aus metallischem Werkstoff - verschlossen ist. Der Druckkanal 36 ist mittels eines oder mehrerer Rohre 39 mit einer oder mehreren Druckquellen 40 (z.B. federbelastende Balge) verbunden. Im ausgefahrenen Zustand der Paneele 4 werden die Druckquellen zwangsweise oder gesteuert aktiviert, so dass die Membran 38 die Wandfläche 30, 32 der Paneele 4, 8 dauerhaft und sicher unter Wirkung des Druckes aus der Druckquelle 40 zu einer Wärmebrücke verspannt. Damit die Membran 38 mit ihrer Kraftwirkung nicht gegen das Gelenk 6 arbeitet, ist die Welle 16 im Querschnitt kein Vollkörper, sondern ein Segment und in der Gelenkhülse 40 befinden sich Ausnehmungen 42 für die Freigabe des Gelenks. Die Wärmebrücke ist folglich frei von Gegenkräften.

In den Fig. 7 bis 9 ist ein weiteres Ausführungsbeispiel der Erfindung gezeigt, wobei hier die Membran 38 konkav gestaltet ist und die Wand 32 der Kulisse 24 bildet, während der Vorsprung 26 aus drei aneinander gekoppelten Wärmerohren 22 gebildet ist. Bei Beaufschlagung der Membran 38 mit dem Druck p werden die Wärmerohre 20, 22 zu einer Wärmebrücke verspannt.

## Patentansprüche

1. Wärmefluss-Kopplungs-Mechanismus zur Verwendung in der Raumfahrt, bestehend aus zwei Paneelen (4, 8), in die jeweils Wärmerohre (20, 22) integriert sind, wobei
- das eine Paneel (8) eine Ausnehmung oder Kulisse (24) aufweist,
- das andere Paneel (4) eine der Kulisse angepasste Nase oder Vorsprung (26) aufweist,
- beide Paneele (4, 8) mittels mindestens eines Gelenks (6) miteinander verbunden sind,
- das Gelenk (6) radial freigegeben wird, wenn der Vorsprung (26) sich vollständig in der Kulisse (24) befindet und
- durch gleichzeitige Freigabe einer Druckquelle (40) eine hydraulisch beaufschlagte Membran (38), die einen Druckkanal (36) abschliesst und einen Teil der Wand (34) der Kulisse (24) bildet, einen Anpressdruck liefert, der die beiden aneinanderliegenden Wandflächen (30, 32) der Paneele (4, 8) zu einer Wärmebrücke verspannt.
